(19)

Europäisches
Patentamt
European
Patent Office
Office européen
des brevets

(11)  **EP 1 452 510 B1**

(12)  **EUROPEAN PATENT SPECIFICATION**

(45) Date of publication and mention
of the grant of the patent:
**05.01.2011  Bulletin 2011/01**

(51) Int Cl.:
**C04B 35/581** *(2006.01)*    **H01L 21/68** *(2006.01)*

(21) Application number: **04251025.5**

(22) Date of filing: **25.02.2004**

(54) **Aluminium nitride materials and members for use in the production of semiconductors**

Aluminiumnitridwerkstoffe und Teile für die Halbleiterherstellung

Matériau de nitrure d'aluminium et éléments utilisés pour la production de semi-conducteurs

(84) Designated Contracting States:
**DE FR GB**

(30) Priority: **28.02.2003  US 451105 P
10.02.2004  JP 2004033892**

(43) Date of publication of application:
**01.09.2004  Bulletin 2004/36**

(73) Proprietor: **NGK Insulators, Ltd.
Nagoya-City, Aichi Pref.  467-8530 (JP)**

(72) Inventors:
• **Kobayashi, Yoshimasa**
**Nagoya-shi**
**Aichi-ken 467-8530 (JP)**
• **Hayase, Toru**
**Nagoya-shi**
**Aichi-ken 467-8530 (JP)**
• **Teratani, Naomi**
**Nagoya-shi**
**Aichi-ken 467-8530 (JP)**
• **Yoshikawa, Jun**
**Nagoya-shi**
**Aichi-ken 467-8530 (JP)**
• **Yamada, Naohito**
**Nagoya-shi**
**Aichi-ken 467-8530 (JP)**

(74) Representative: **Paget, Hugh Charles Edward et al
Mewburn Ellis LLP
33 Gutter Lane
London
EC2V 8AS (GB)**

(56) References cited:
**EP-A- 0 548 424      EP-A- 1 078 902
EP-A- 1 249 859      EP-A- 1 314 707
US-A- 5 705 450      US-A1- 2002 110 709
US-B1- 6 225 249**

• **VANDAMME N S ET AL: "LIQUID-PHASE
SINTERING OF ALUMINUM NITRIDE BY
EUROPIUM OXIDE ADDITIVES" JOURNAL OF
THE AMERICAN CERAMIC SOCIETY, AMERICAN
CERAMIC SOCIETY. COLUMBUS, US, vol. 72, no.
8, 1 August 1989 (1989-08-01), pages 1409-1414,
XP000115194 ISSN: 0002-7820**

Remarks:
The file contains technical information submitted after
the application was filed and not included in this
specification

**Description**

BACKGROUND OF THE INVENTION

1. Field of the Invention

The invention relates to an aluminum nitride material and a member for use in the production of semiconductors.

2. Related Art Statement

An electrostatic chuck system utilizing Johnson-Rahbek effect is useful for the adsorption and retention of semiconductor wafers. In such system, the volume resistivity of the substrate of the chuck may preferably be $10^8$ to $10^{13}$ $\Omega\cdot$cm for improving adsorption force and speed of response. It is therefore desirable to control the volume resistivity of the substrate within $10^8$ to $10^{13}$ $\Omega \cdot$ cm in a temperature range intended for use, in the development of an electrostatic chuck.

For example, the assignee filed Japanese patent publication 9-315, 867A and disclosed a method of adding a trace amount of yttrium oxide into aluminum nitride having a high purity to control the volume resistivity at room temperature at a value between $10^8$ to $10^{13}$ $\Omega \cdot$ cm.

The assignee has further filed U. S. Patent publication 2002-0110709A1 and disclosed an aluminum nitride sintered body containing samarium in a content of 0.04 mole percent or more to generate continuous samarium-aluminum oxide phase. The thus obtained sintered body has a volume resistivity of $10^{12}$ $\Omega \cdot$ cm or lower at room temperature. This publication mentions that a second rare earth element may be present, dissolved in for example $SmAL_{11}O_{18}$ phase. A list of second rare earth elements includes Eu.

SUMMARY OF THE INVENTION

The effects of the addition of rare earth elements other than yttrium to an aluminum nitride sintered body is not described in Japanese patent publication 9-315, 867A. According to an aluminum nitride sintered body described in U. S. Patent publication 2002-0110709A1, it is necessary to increase the content of samarium to 0.04 mole percent or higher calculated as the oxide for realizing a volume resistivity of about $10^{12}$ $\Omega \cdot$ cm at room temperature. As the content of samarium is higher, the volume resistivity at room temperature lowers.

An object of the present invention is to provide a novel aluminum nitride based material having a low volume resistivity at room temperature.

The present invention provides an aluminum nitride material as set out in claim 1

The inventors have found that the volume resistivity of an aluminum nitride material can be reduced by adding predetermined amounts of europium and samarium in the material to generate a composite oxide phase containing at lease europium and aluminum. It is further proved that the dependency of the volume resistivity of the material on an applied voltage can be reduced.

The effects, features and advantages of the invention will be appreciated upon reading the following description of the invention when taken in conjunction with the attached drawings, with the understanding that some modifications, variations and changes of the same could be made by the skilled person in the art.

Brief Description of the Drawings

Fig. 1 is a phase diagram of $Eu_2O_3$-$Al_2O_3$ system.

Fig. 2 shows a X-ray diffraction profile of a sample according to an example 5.

Fig. 3 is a back scattering image taken by a scanning electron microscope of a sample according to an example 5.

Fig. 4 shows results of analysis of elements by EPMA over the same visual field as Fig. 3.

Fig. 5 is a graph showing the dependency of current on applied voltage and results of fitting using method of least squares of an example 5.

The aluminum nitride material may preferably be an aluminum nitride sintered body. The content of aluminum in the aluminum nitride material should be enough for forming aluminum nitride grains as the main phase. The content may preferably be not lower than 35 weight percent, and more preferably be not lower than 50 weight percent, of the material.

The total of the contents of europium and samarium is 0.09 mole percent or higher. The total of the contents calculated as the oxides may preferably be 0.15 mole percent or higher and more preferably be 0.2 mole percent or higher, for reducing the volume resistivity. Further, from the viewpoint of improving the thermal conductivity of the aluminum nitride material, a total of the contents of europium and samarium calculated as the oxides may preferably be 10 mole percent or lower, and more preferably be 5 mole percent or lower.

The molar ratio of the contents of europium to samarium calculated as the oxides ($Eu_2O_3/Sm_2O_3$) is 0.2 or higher. It is thus possible to reduce $\alpha$ value at 1.4 or lower. For further reducing $\alpha$ (for making the dependency of the volume resistivity on applied voltage more ohmic), ($Eu_2O_3/Sm_2O_3$) may preferably be 0.6 or higher, more preferably 1.0 or higher, and most preferably 1.5 or higher.

The contents of europium and samarium calculated as the oxides ($Eu_2O_3$, $Sm_2O_3$) are calculated based on the chemical analysis values of europium and samarium contained in an aluminum nitride material. The total oxygen content in the material is determined by infrared absorptiometry. The oxygen contents in $Eu_2O_3$, $Sm_2O_3$ and MgO are subtracted from the measured total oxygen content to calculate the remaining oxygen. The content of $Al_2O_3$ is calculated under the provision that all the remaining oxygen atoms constitute $Al_2O_3$.

"$\alpha$" will be described further in detail. In an aluminum nitride sintered body described in Japanese patent publication 9-315, 867A, it is possible to reduce the volume resistivity. It is proved that, however, such sintered body shows a non-linear relationship between voltage and current. That is, the change of leak current largely depends on the change of an applied voltage. Specifically, a non linear index "$\alpha$" is proved to be as high as 1.5 to 2.0, provided that $I = kV^\alpha$ where "V" represents a voltage applied on the material, "I" represents a leakage current when a voltage of "V" is applied and "k" represents a constant.

Such non-ohmic voltage-current behavior is not desirable for a member for use in a system for producing semiconductors, such as a semiconductor susceptor embedding an electrostatic chuck electrode. For example, in a case of a ceramic electrostatic chuck, a dielectric layer is provided between the electrostatic chuck electrode and the surface. The thickness of the dielectric layer is not constant and has some degree of deviation or change. The voltage applied between the electrode and surface is constant at the same time. The applied electric field (V/mm) is smaller in a region where the dielectric layer is thicker, and the field (V/mm) is larger in a region where the dielectric layer is thinner. When the leakage current shows non-ohmic behavior according to the change of the applied voltage, the deviation of the leakage current on the surface becomes larger so that the adsorption force becomes unstable. The aluminum nitride material of the present invention may exhibit an extremely low $\alpha$ and ohmic resistance property depending on the conditions.

In a preferred embodiment, the aluminum nitride material has a volume resistivity at room temperature of $10^{13} \Omega \cdot$ cm or lower, and possibly $10^{12} \Omega \cdot$ cm or lower, at an applied voltage of 500 V/mm.

In a preferred embodiment the europium-aluminum composite oxide phase has network-like microstructure. That is, the europium-aluminum composite oxide phase is formed along the interfaces (intergranular phase) between aluminum nitride grains so that the phase surrounds the grains to form fine network like structure.

The mean grain diameter of aluminum nitride grains in the material may preferably be 3 $\mu$m or larger, and more preferably be 5 $\mu$m or larger. The mean grain diameter may preferably be 20 $\mu$m or smaller.

The aluminum nitride material contains a composite oxide phase containing at least europium and aluminum. The composite oxide phase may be an europium-aluminum composite oxide phase or an europium-samarium-aluminum composite oxide phase. The europium-aluminum composite oxide phase is $EuAl_{12}O_{19}$, and the phase $EuAl_{11}O_{18}$ may also be present. The europium-samarium-aluminum composite oxide phase is (Re) $Al_{12}O_{19}$, and the phase (Re) $Al_{11}O_{18}$ may also be present (Re represents Eu and Sm). The material may further includes a samarium-aluminum composite oxide phase in addition to the europium-aluminum composite oxide and europium-samarium-aluminum composite oxide phases. These crystalline phases have peak tops in a range of 18.5 to 19.0° in an X-ray diffraction chart. The aluminum nitride material may further includes the other crystalline phases such as $EuAl_2O_4$, $SmAlO_3$, $Al_5O_6N$, and $MgAl_2O$, phases.

The relative density of the aluminum nitride material may preferably be 95 % or higher.

The aluminum nitride material may contain a rare earth element other than samarium and europium. Such additional elements include scandium, yttrium, lanthanum, cerium, praseodymium, neodymium, promethium, gadolinium, terbium, dysprosium, holmium, erbium, thulium, ytterbium and lutetium.

The raw material of aluminum nitride may be produced by various processes, including direct nitriding, reduction nitriding and gaseous phase synthesis from an alkyl aluminum.

Materials of europium and samarium are added to aluminum nitride raw material. Such materials include europium oxide and samarium oxide. Alternatively, a compound which forms samarium oxide or europium oxide upon heating (a precursor of samarium or europium oxide) may be added to the raw material of aluminum nitride. The precursor includes europium nitrate, samarium nitrate, europium sulfate, samarium sulfate, europium oxalate and samarium oxalate. The precursors may be added as powder. Alternatively, each precursor may be dissolved into a solvent to obtain solution, which is then added to the raw material. It is possible to uniformly disperse europium or samarium in the intergranular phase between aluminum nitride grains by dissolving the precursors in a solvent.

The raw material may be shaped by any known methods including dry press, doctor blade, extrusion, casting and tape forming methods.

In a formulating step, powder of aluminum nitride raw material may be dispersed into a solvent and the compound of a rare earth element described above may be added in a form of oxide powder or solution. In a mixing step, it is possible to simply agitate the formulation. When the raw powder contains aggregates, it is possible to use a mixing and grinding machine, such as a pot mill, trommel and attrition mill, for grinding the aggregates. When using an additive which is soluble in a solvent for grinding, it is enough to carry out the mixing and grinding step for a short (minimum) time required for the grinding the grains. Further, a binder component, such as polyvinyl alcohol, may be added.

The solvent used for the mixing step may be volatilized, preferably by spray dry method. After carrying out vacuum drying process, the grain distribution of the dried grains may preferably be adjusted by passing the grains through a mesh.

In a shaping step of the powdery material, the material may be pressed using a mold to provide a disk-shaped body. The pressure for pressing raw material is not particularly limited, as long as the shaped body may be handled without causing any fracture. The pressure may preferably be not lower than 100 kgf / cm$^2$. The powdery material may be supplied into a die for hot pressing without particularly shaping the powdery material.

The sintered body according to the invention may preferably be produced by sintering at ambient pressure or hot pressing, preferably at a pressure of 50 kgf/cm$^2$ or larger.

The material according to the invention may preferably be used for various members in a system for producing semiconductors, such as systems for treating silicon wafers and for manufacturing liquid crystal displays.

The member for producing semiconductors according to the invention may preferably be an anti-corrosion member, such as a susceptor for a system for producing semiconductors. The inventive member is also suitable for an article having the above anti-corrosion member and a metal member embedded within the anti-corrosion member. Such anti-corrosion member includes a susceptor, a ring and a dome set in a system for producing semiconductors. A resistance heating element, an electrode for an electrostatic chuck and an electrode for generating high-frequency wave may be embedded within the susceptor.

The aluminum nitride material according to the invention has a low electrical resistivity as described above, and therefore suitable as a substrate of an electrostatic chuck. An electrostatic chuck electrode is embedded within the substrate of the chuck. It is possible to further embed a resistance-heating element, an electrode for generating plasma or the like within the substrate.

In a preferred embodiment of the present invention, the material contains an element belonging to IIA group of the Periodic Table in an amount of 0.01 to 2 mole percent calculated as the oxide. It is thus possible to lower a sintering temperature and to reduce the grain diameters so as to further improve the strength of the sintered body. The element may preferably be Mg and /or Ca. Further, the content of the element belonging to IIA group of the Periodic Table may preferably be 0.1 mole percent or higher, or, 1.2 mole percent or lower.

In a preferred embodiment of the present invention, the material contains an element belonging to IVA group of the Periodic Table in an amount of 0.01 to 10 mole percent calculated as the nitride. It is thus possible to control the volume resistivity at a higher precision. Such elements may preferably be Ti, Zr or Hf, and may most preferably be Ti. The content of the element belonging to IVA group of the Periodic Table may more preferably be 0.5 mole percent or more on the above viewpoint, or, 4 mole percent or lower.

EXAMPLES

Aluminum nitride sintered bodies were produced and the properties were evaluated as follows.

(1a) Production of mixed powder of aluminum nitride/europium oxide

Commercial AlN powder produced by reduction nitriding (an oxygen content of 0.87 weight percent) was used. Commercial powder of europium oxide with a purity of 99.9 percent or more and a mean grain diameter of 1.1 $\mu$ m was used.

Each powder was weighed as shown in table 1. Weighed powders were then subjected to wet blending using isopropyl alcohol as a solvent, a nylon pot and nylon media for 4 hours to obtain slurry. After the blending, the slurry was collected and dried at 110 °C. The thus dried powder was then subjected to heat treatment in an atmosphere at 450 °C for 5 hours to remove carbon content contaminated during the wet blending to produce raw mixed powder. The compositions (molar percent) were calculated ignoring the contents of impurities in AlN, Eu$_2$O$_3$ and Al$_2$O$_3$ powders.

(1b) Production of mixed powder of aluminum nitride/europium oxide/samarium oxide/(magnesium oxide)/(calcium carbonate)/(titanium nitride)

AIN powder produced by reduction nitriding (an oxygen content of 0.87 weight percent) was used. Commercial powder of europium oxide with a purity of 99.9 percent or more and a mean grain diameter of 1.1 $\mu$m was used. Commercial powder of samarium oxide with a purity of not lower than 99.9 percent and a mean grain diameter of 1.1 $\mu$m was used. Commercial powder of magnesium oxide with a purity of not lower than 99.4 percent and a mean grain diameter of 1.1 $\mu$m was used. Commercial powder of calcium carbonate with a purity of 99.9 percent or higher and a mean grain diameter of not larger than 12 $\mu$m, and commercial powder of titanium nitride with a purity of not lower than 95 percent or higher and mean grain diameter of 1.3 $\mu$m were used.

The powdery raw materials were weighed as shown in table 1, and then formulated as described in the step (1a) to obtain formulated powder. The compositions (molar percent) of the formulated powder were calculated ignoring the contents of impurities in AIN, $Eu_2O_3$, $Al_2O_3$, MgO, $CaCO_3$, and TiN powders.

(2) Shaping and sintering steps

Each formulated powder obtained in (1) was then shaped by means of uniaxial pressing at a pressure of 200 kgf / $cm^2$ to obtain a disk-shaped body with a diameter $\phi$ of 50 mm or 100 mm and a thickness of 20 mm, which was then contained within a mold made of graphite for sintering.

Each shaped body was sintered by hot pressing at a pressure of 200 kgf / $cm^2$, a temperature and a holding time period shown in table 1 and then cooled. During the sintering, the shaped body was set in vacuum from room temperature to 1000 °C and then nitrogen gas was introduced at a pressure of 1.5 kgf/$cm^2$ from 1000 °C to each sintering temperature.

(3) Evaluation

The thus obtained sintered bodies were processed and then subjected to the following evaluations.

(Contents of Eu, Sm, Mg, Ca, Ti, O, and C)

The contents are measured by chemical analysis.

(Content of $Eu_2O_3$)

The above obtained "content of Eu" is converted to the content of $Eu_2O3$. This value is represented as "converted content of $Re_2O_3$ in table 1

(Content of $Sm_2O_3$)

The above obtained "content of Sm" is converted to the content of $Sm_2O_3$. This value is also represented as "content of Re203 in table 1.

(Content of $Al_2O_3$)

The total content of oxygen in the sintered body is obtained. The oxygen contents in $Re_2O_3$, MgO and CaO are then subtracted from the total content of oxygen to calculate the remaining oxygen. The content of $Al_2O_3$ is calculated under the provision that all the remaining oxygen atoms constitute $Al_2O_3$.

(Bulk density, Open porosity)

They are measured by Archimedes method using pure water as a medium.

(Volume resistivity)

It is measured by a method according to "JIS C 2141" under vacuum from room temperature to about 400 °C. The test sample has the following parts: a plate with 50 mm $\times$ 50 mm $\times$ 1 mm; a main electrode with a diameter of 20 mm; a guard electrode with an inner diameter of 30 mm and outer diameter of 40 mm; and an applying electrode with a diameter of 45 mm. The electrodes are formed of silver. The applied voltage is 500 V/mm. A current is read one minute after the application of voltage so that the volume resistivity is calculated.

In the columns in table 2, for example, "1.1 × 10¹²" is represented as "1.1E +12". The same method of representation is also applied in tables 4, 6 and 8.

(Activation energy)

An activation energy (Ea) of temperature dependency of volume resistivity from room temperature to 300 °C is calculated according to the following equation.

$$\ln \ \sigma = A - Ea \, / \, (kT)$$

σ : electrical conductivity = 1/ρ
k : Boltzman's constant
A: a constant
ρ : volume resistivity
T : absolute temperature

(α) The voltage applied on the sample is changed from 10 to 500 V/mm. Each current value is measured about 60 seconds after the application of voltage. The applied voltage and current values are plotted in a graph. In the graph, the leakage current "I" is assigned to the vertical axis on logarithm scale, and the applied voltage "V" is assigned to the horizontal axis on logarithm scale. The relationship of the current "I" and voltage "V" is fitted to a linear function in the graph representing a function of I=kV$^\alpha$ based on least square method to calculate the parameters "α" and "k". "α" is calculated as a gradient of the linear function and shown in the tables.

(Thermal conductivity)

It is measured by laser flash method.

(Mean grain diameter of AIN grains)

The sintered body is polished to obtain a polished surface. The microstructure on the surface is observed using an electron microscope to measure the grain diameter values of AIN grains. An average of 30 values is calculated.

(Length of columnar aggregate)

The sintered body is polished to obtain a polished surface. The microstructure on the surface is observed using an electron microscope to measure the lengths of the columnar aggregates. An average of 30 values of the lengths is calculated.

(Crystalline phase)

It is determined by using a rotating anode type X-ray diffraction system "RINT" supplied by "Rigaku Denki" under the following conditions: CuKα, 50 kV, 300 mA, and 2θ =10 to 70°.
table 1

| Examples 1-11 | powdery raw material | | | | sintering condition | | properties of sintered body | | | | | | |
| | AlN powder | | | | | | chemical analysis data | | | | | | |
| | oxygen content | Eu2O3 | Sm2O3 | Al2O3 | maximum temperature | holding time | Eu content | Sm content | 0 content | C content | Re2O3 converted content | Al2O3 converted content | Re2O3/ Al2O3 |
| | Wt% | mol% | mol% | mol% | °C | h | wt% | wt% | w% | wt% | mol% | mol% | molar ratio |
| 1 | 0.87 | 0.06 | 0.06 | 1.27 | 1900 | 4 | 0.35 | 0.33 | 2.17 | 0.027 | 0.094 | 1.802 | 0.052 |
| 2 | 0.87 | 0.08 | 0.03 | 1.27 | 1900 | 4 | 0.51 | 0.22 | 2.18 | 0.028 | 0.101 | 1.800 | 0.056 |
| 3* | 0.87 | 0.04 | 0.35 | 0.67 | 1900 | 4 | 0.14 | 1.91 | 1.26 | 0.050 | 0.284 | 0.811 | 0.350 |
| 4 | 0.87 | 0.38 | 0.16 | 5.94 | 1950 | 4 | 0.86 | 0.50 | 4.34 | 0.026 | 0.194 | 3.706 | 0.052 |
| 5 | 0.87 | 0.27 | 0.27 | 5.94 | 1950 | 4 | 0.60 | 0.59 | 4.91 | 0.026 | 0.173 | 4.333 | 0.040 |
| Compara-Tive Example 1 | 0.97 | - | - | - | 2000 | 4 | - | - | 0.84 | - | - | - | - |
| * outside of the invention | | | | | | | | | | | | | |

table 2

| Examples 1-11 | open porosity | bulk density | volume resistivity ($\Omega \cdot cm$) | | activation energy | non linear index | thermal conductivity | mean grain diameter of columnar aggregates | mean grain diameter of AlN | crystalline phase (except AlN) |
|---|---|---|---|---|---|---|---|---|---|---|
| | % | g/cm$^3$ | 25°C | 300°C | (eV) | $\alpha$ | W/mK | $\mu m$ | $\mu m$ | |
| 1 | 0.01 | 3.28 | 1.2E+12 | 2.2E+09 | 0.35 | 1.10 | 78 | - | 6 | ReA111018 (ReA112019), Al506N |
| 2 | 0.01 | 3.28 | 8.2E+12 | 7.3E+07 | 0.66 | 1.05 | 80 | - | 5 | ReA111018 (ReA112019), A1506N |
| 3* | 0.01 | 3.30 | 7.9E+10 | 1.0E+08 | 0.39 | 1.39 | 84 | - | 6 | ReA111018 (ReA112019), EuA1204 , ReA103* |
| 4 | 0.01 | 3.31 | 1.3E+12 | 1.7E+08 | 0.51 | 1.04 | 63 | 170 | 8 | ReAl11018 (ReA112019), A1506N |
| 5 | 0.03 | 3.31 | 4.7E+10 | 5.8E+07 | 0.34 | 1.20 | 59 | 190 | 8 | ReAl11018 (ReA112019), Al506N |
| Comparative example 1 | 0.04 | 3.26 | 5.2E+09 | <1E+7 | 0.71 | 3.30 | 97 | 8 | 8 | Y4A1209 |
| * outside of the invention | | | | | | | | | | |

Also in examples 1, 2, 4 and 5, the volume resistivity at room temperature is reduced to a value not higher than $10^{13}$ $\Omega \cdot$ cm by reducing a molar ratio $Re_2O_3/Al_2O_3$. The non-linear constant "$\alpha$" is reduced to a value not higher than 1.3, by increasing a molar ratio $Eu_2O_3 / Sm_2O_3$ to 1 or higher.

In comparative example 1, $Y_2O_3$ is added as an aid without adding $Eu_2O_3$ and $Sm_2O_3$. "$\alpha$" is proved to be substantially large.

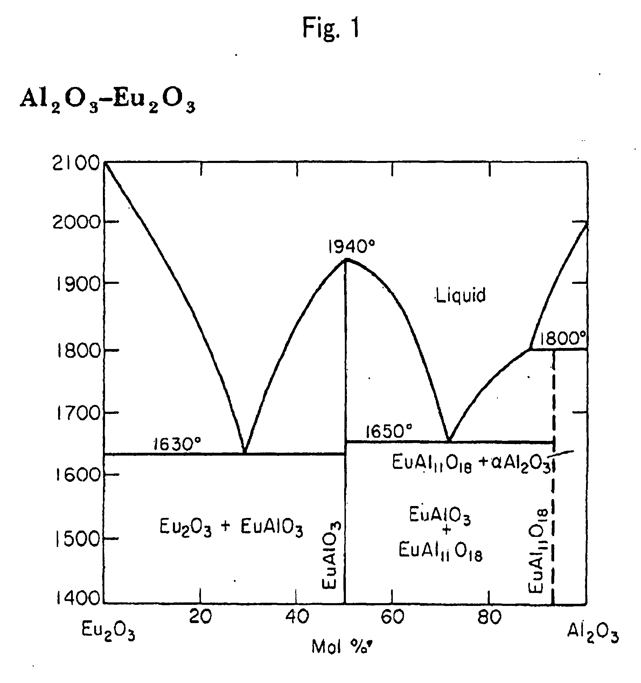

Fig. 1 is a phase diagram of $Eu_2O_3$-$Al_2O_3$ system (Phase Diagrams for Ceramists 1975 Supplement, Fig. 4367). The presence of $EuAl_{11}O_{18}$ phase is confirmed in the phase diagram,

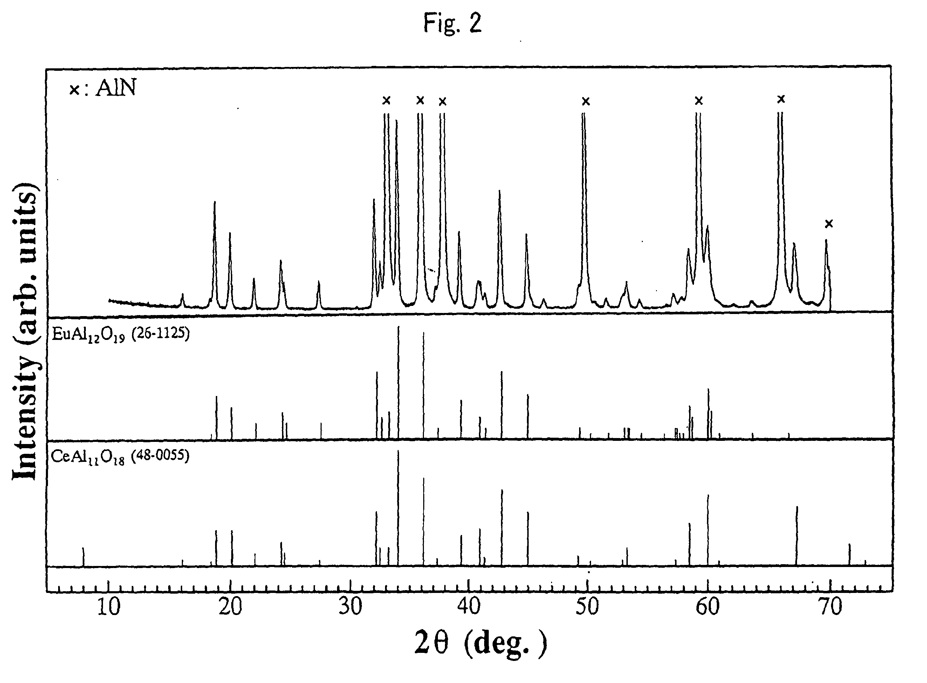

Fig.2 is an X-ray diffraction profile of a sample of example 5. $EuAl_{11}O_{18}$, $EuAl_{12}O_{19}$ or $SmAl_{11}O_{18}$ phase and $Al_5O_6N$ phase are detected other than AlN phase.

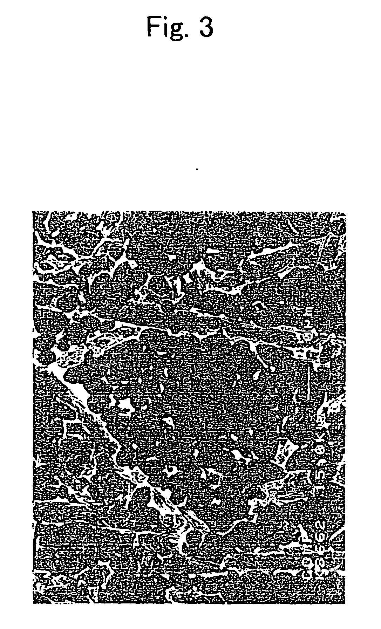

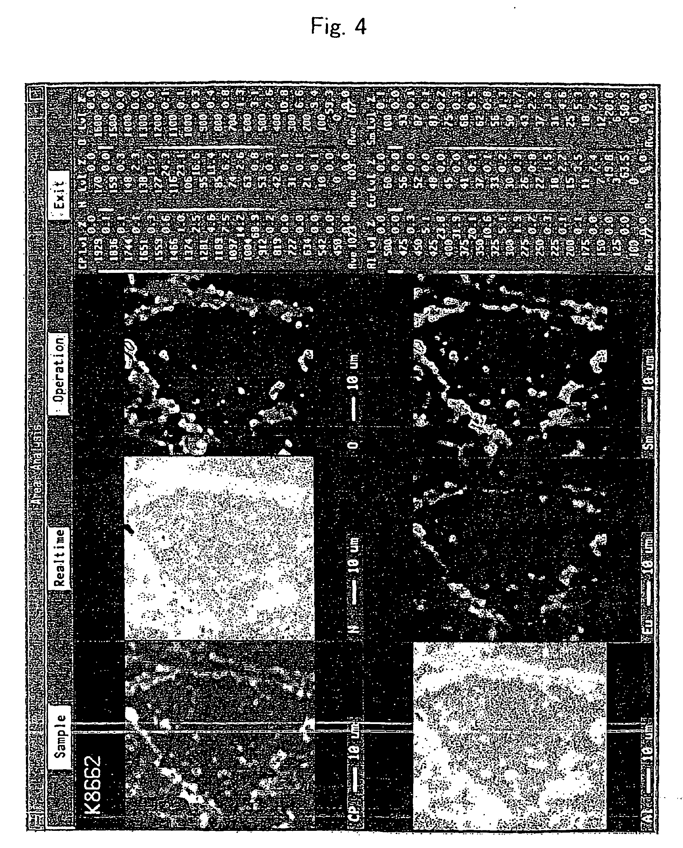

Fig 3 is a current distribution analytic image of the sintered body of example 5, and Fig. 4 is an image showing distribution of elements in the sintered body taken by EPMA over the same visual field as Fig. 3. It is proved that the intergranular regions are interconnected with each other and the distributions of Eu and Sm are identical. The results also correspond with the profile of X-ray diffraction analysis.

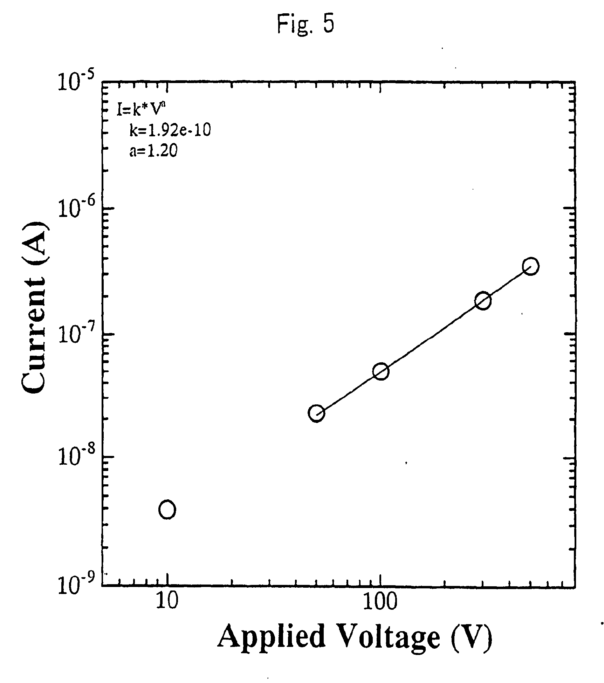

Fig. 5 is a graph showing a current value after a voltage of 50 to 500 V/mm is applied on the sample of example 5 for about 60 seconds. The linear functions in the figures show the results of method of least squares applying a fitting function of $I=kV^\alpha$. The "$\alpha$" value was 1.20 in the example 5, exhibiting nearly ohmic properties. It is thus proved that the inventive material has a small dependency of current value on an applied voltage.

Sintered bodies according to examples 6 to 9 were produced according to the same procedure as the above examples under the conditions shown in table 3. In the examples 6 and 7, titanium nitride powder was not added to the raw material and titanium nitride powder was added to the raw material in examples 8 and 9. The compositions of the examples 6 and 8 are similar, and the compositions of the examples 7 and 9 are similar. As a result, the resistivity can be slightly reduced by adding titanium nitride. It is thus proved that the volume resistivity can be controlled at a higher precision by adding an element belonging to IVA group of the Periodic Table such as titanium nitride.

Table 3

| Example | powdery raw material | | | | | sintering condition | | properties of sintered body | | | | | | | |
|---|---|---|---|---|---|---|---|---|---|---|---|---|---|---|---|
| | AIN powder | | | | | | | chemical analysis data | | | | | | | |
| | oxygen content | Eu2O3 | Sm2O3 | TiN | Al2O3 | maximum tempera ture | holding time | Eu content | Sm Content | Ti content | 0 content | C content | Re2O3 converted content | Al2O3 converted content | Re2O3/ Al2O3 |
| | wt% | mol% | mol% | mol% | mol% | °C | h | wt% | wt% | wt% | wt% | wt% | mol% | Mol% | molar ratio |
| 6 | 0.87 | 0.16 | 0.38 | - | 6.0 | 1925 | 4 | 0.51 | 1.17 | - | 5.36 | 0.024 | 0.249 | 4.737 | 0.052 |
| 7 | 0.87 | 0.22 | 0.33 | - | 5.9 | 1925 | 4 | 0.72 | 1.07 | - | 5.22 | 0.024 | 0.264 | 4.586 | 0.058 |
| 8 | 0.87 | 0.16 | 0.38 | 2.4 | 5.8 | 1925 | 4 | 0.51 | 1.22 | 2.78 | 5.57 | 0.078 | 0.260 | 5.008 | 0.052 |
| 9 | 0.87 | 0.22 | 0.33 | 2.4 | 5.8 | 1925 | 4 | 0.89 | 1.35 | 2.96 | 5.94 | 0.081 | 0.340 | 5.338 | 0.054 |

Table 4

| properties of sintered body | | | | | | |
|---|---|---|---|---|---|---|
| | open porosity | bulk density | volume resistivity (Ω·cm) | length of columnar aggregates | mean grain diameter of AlN | crystalline phase (except AlN) |
| | % | g/cm³ | 25°C | μm | μm | |
| example 6 | 0.05 | 3.33 | 9.5E+09 | 210 | 6.7 | EuAl11018 (EuA112019), Al506N |
| example 7 | 0.02 | 3.33 | 4.5E+10 | 200 | 6.6 | EuAl11018 (EuA112019), Al506N |
| example 8 | 0.00 | 3.39 | 3.2E+09 | 190 | 6.3 | EUAl11018 (EUA112019), Al506N |
| example 9 | 0.02 | 3.37 | 2.9E+09 | 180 | 6.0 | EUAl11018 (EUA112019), Al506N |

Sintered bodies of examples 10 to 12 were proceded according to the same procedure as the above example under th conditions shown in table 5. Titanium nitride and magnesium oxide were to the raw material. The sintered bodies of the examples 10 to 12 had columnar aggregates formed therein, and the intergranular phase forms network like structure in the aggregates. The polished surface of each sintered body was observed as a back scattering image in a magnitude of 200 to measure the lengths of the columnar aggregates. It was proved that the length of the columnar aggregates and mean grain diameter of AlN grains were smaller as the content of MgO is higher. The aspect ratio of the columnar aggregates was proved to be 10 to 17 in the examples 10 to 12.

Table 5

| exa mple | powdery raw material | | | | | | sintering condition | | properties of sintered body | | | | | | | | |
| | AIN powder | | | | | | | | chemical analysis data | | | | | | | | |
| | oxygen content | Eu2O3 | Sm2O3 | TiN | MgO | Al2O3 | maxi mum tempe rature | holding time | Eu content | Sm content | Ti content | Mg content | O content | C content | Re2O3 converted content | Al2O3 converted content | Re2O3/ Al2O3 |
| | wt% | mol% | mol% | mol% | mol% | mol% | °C | h | wt% | wt% | wt% | wt% | wt% | wt% | mol% | mol% | molar ratio |
| 10 | 0.87 | 0.17 | 0.17 | 1.5 | 0.029 | 3.5 | 1925 | 2 | 0.91 | 0.91 | 1.96 | 0.015 | 4.27 | 0.062 | 0.268 | 3.676 | 0.073 |
| 11 | 0.87 | 0.17 | 0.17 | 1.5 | 0.12 | 3.5 | 1925 | 2 | 0.86 | 0.87 | 1.99 | 0.06 | 4.54 | 0.071 | 0.255 | 3.923 | 0.065 |
| 12 | 0.87 | 0.17 | 0.17 | 1.5 | 0.23 | 3.3 | 1925 | 2 | 0.86 | 0.86 | 2.00 | 0.12 | 3.91 | 0.067 | 0.251 | 3.272 | 0.077 |

Table 6

| properties of sintered body | | | | | | |
|---|---|---|---|---|---|---|
| | open porosity | bulk density | volume resistivity ($\Omega \cdot$cm) | length of columnar aggregates. | mean grain diameter of AlN | crystalline phase (except AlN) |
| | % | g/cm$^3$ | 25°C | mm | $\mu$m | |
| example 10 | 0.09 | 3.34 | 2.3E+10 | 140 | 6.3 | EuAl11018 (EuAl12019), Al506N , EuAl204, ReAl03 |
| example 11 | 0.09 | 3.34 | 1.7E+10 | 130 | 5.5 | EuAl11018 (EuAl12019), A1506N |
| example 12 | 0.01 | 3.35 | 4.6E+10 | 100 | 4.3 | EuAl11018 (EuA112019) |

Sintered bodies of examples 13 to 28 were produced according to the same procedure as the above examples under the conditions shown in table 7. Titanium nitride and magnesium oxide or calcium oxide were, however, added to the raw material. It was thus proved that the volume resistivity was lowered as the columnar aggregates are made longer in examples 13 to 17, especially as shown in table 8. Further, the same tendency was observed in the examples 20 to 23. The aspect ratio of the columnar aggregates was proved to be 10 to 30 in the examples 13 to 28.

# Table 7

| Ex | AlN powder oxygen content | Eu2O3 | Sm2O3 | TiN | MgO | CaO | Al2O3 | maximum temperature | holding time | Eu content | Sm content | Ti content | Mg content | Ca content | O content | C content | Re2O3 converted content | Al2O3 converted content | Re2O3 / Al2O3 |
|---|---|---|---|---|---|---|---|---|---|---|---|---|---|---|---|---|---|---|---|
| | Wt% | mol% | mol% | mol% | Mol% | mol% | mol% | °C | h. | wt% | wt% | wt% | wt% | wt% | wt% | wt% | mol% | mol% | Molar ratio |
| 13 | 0.87 | 0.085 | 0.086 | 0.77 | 0.12 | - | 1.5 | 1925 | 2 | 0.55 | 0.61 | 1.17 | 0.064 | - | 2.18 | 0.43 | 0.164 | 1.741 | 0.094 |
| 14 | 0.87 | 0.10 | 0.10 | 0.92 | 0.12 | - | 1.9 | 1925 | 2 | 0.56 | 0.56 | 1.37 | 0.059 | - | 2.57 | 0.051 | 0.159 | 2.109 | 0.076 |
| 15 | 0.87 | 0.12 | 0.12 | 1.1 | 0.12 | - | 2.4 | 1925 | 2 | 0.60 | 0.60 | 1.57 | 0.060 | - | 3.23 | 0.057 | 0.173 | 2.717 | 0.064 |
| 16 | 0.87 | 0.17 | 0.17 | 1.5 | - | - | 3.3 | 1925 | 2 | 0.84 | 0.83 | 1.75 | - | - | 4.10 | 0.067 | 0.244 | 3.534 | 0.069 |
| 17 | 0.87 | 0.19 | 0.19 | 1.7 | - | - | 3.9 | 1925 | 2 | 0.90 | 0.87 | 2.11 | - | - | 4.75 | 0.038 | 0.262 | 4.167 | 0.063 |
| 18 | 0.87 | 0.27 | 0.27 | 2.4 | - | - | 5.6 | 1925 | 2 | 1.01 | 1.04 | 2.83 | - | - | 5.63 | 0.097 | 0.309 | 5.037 | 0.061 |
| 19 | 0.87 | 0.17 | 0.17 | 1.5 | 0.12 | - | 2.9 | 1925 | 4 | 0.87 | 0.81 | 2.39 | 0.060 | - | 3.73 | 0.063 | 0.245 | 3.148 | 0.078 |
| 20 | 0.87 | 0.17 | 0.17 | 1.5 | - | 0.15 | 3.6 | 1925 | 2 | 0.75 | 0.75 | 1.90 | - | 0.060 | 4.76 | 0.062 | 0.221 | 4.179 | 0.053 |
| 21 | 0.87 | 0.17 | 0.17 | 1.5 | 0.12 | - | 3.6 | 1910 | 4 | 0.85 | 0.86 | 1.97 | 0.060 | - | 4.80 | 0.056 | 0.253 | 4.181 | 0.060 |
| 22 | 0.87 | 0.17 | 0.17 | 1.5 | 0.2 | - | 3.8 | 1900 | 4 | 0.77 | 0.78 | 2.02 | 0.11 | - | 5.92 | 0.055 | 0.232 | 5.290 | 0.044 |
| 23 | 0.87 | 0.22 | 0.22 | 2.5 | 0.15 | - | 4.7 | 1900 | 4 | 1.22 | 1.20 | 3.19 | 0.077 | - | 5.72 | 0.079 | 0.367 | 5.047 | 0.077 |
| 24 | 0.87 | 0.37 | 0.16 | 2.4 | - | - | 5.8 | 1950 | 4 | 0.70 | 0.31 | 2.92 | - | - | 4.83 | 0.079 | 0.149 | 4.346 | 0.034 |
| 25 | 0.87 | 0.37 | 0.16 | 2.4 | 0.19 | - | 5.8 | 1950 | 4 | 1.67 | 0.76 | 3.17 | 0.085 | - | 6.18 | 0.086 | 0.370 | 5.516 | 0.067 |
| 26 | 0.87 | 0.13 | 0.20 | 1.5 | 0.35 | - | 3.6 | 1925 | 2 | 0.64 | 0.99 | 1.87 | 0.177 | - | 4.29 | 0.071 | 0.237 | 3.612 | 0.065 |
| 27 | 0.87 | 0.13 | 0.20 | 1.5 | 0.67 | - | 5.1 | 1900 | 2 | 0.71 | 1.06 | 1.93 | 0.344 | - | 4.97 | 0.065 | 0.260 | 4.156 | 0.063 |
| 28 | 0.87 | 0.13 | 0.20 | 1.5 | 0.48 | - | 4.9 | 1900 | 2 | 0.69 | 1.05 | 1.90 | 0.442 | - | 4.84 | 0.063 | 0.255 | 3.967 | 0.064 |

Table 8

| properties of sintered body | | | | | | |
|---|---|---|---|---|---|---|
| Example | open porosity | bulk density | volume resistivity (Ω·cm) | length of columnar aggregates | mean grain diameter of AlN | crystalline phase (except AlN) |
| | % | g/cm$^3$ | 25°C | μm | μm | |
| 13 | 0.03 | 3.31 | 3.7E+11 | 60 | 3.9 | EuA111018 (EuA112019), EuA1204, ReAl03, MgAl1203; |
| 14 | 0.01 | 3.31 | 1.3E+11 | 70 | 4.0 | EuAl11018 (EuAl12019), ReAl03 |
| 15 | 0.11 | 3.31 | 3.0E+10 | 80 | 4.7 | EuAl11018 (EuAl12019) |
| 16 | 0.07 | 3.33 | 1.2E+10 | 210 | 4.9 | EuAl111018 (EuAl12019), EuA1204, ReAl03 |
| 17 | 0.08 | 3.34 | 1.0E+10 | 210 | 4.9 | EuAl11018 (EuA112019), Al506N, EuA1204, ReAl03 |
| 18 | 0.10 | 3.37 | 1.2E+10 | 160 | 5.8 | EuAl11018 (EuAl12019), Al506N |
| 19 | 0.04 | 3.33 | 5.5E+10 | 40 | 5.8 | ReAl11018 (ReAl12019), EuA1204, ReAl03 |
| 20 | 0.07 | 3.37 | 7.4E+10 | 270 | 4.9 | ReAl11018 (ReAl12019), Al506N |
| 21 | 0.03 | 3.34 | 2.5E+10 | 290 | 4.6 | ReAl11018 (ReAl12019), Al506N |
| 22 | 0.02 | 3.36 | 3.9E+10 | 120 | 4.9 | ReAl11018 (ReAl12019), A1506N |
| 23 | 0.00 | 3.41 | 1.7E+11 | 160 | 5.0 | ReAl11018 (ReAl12019), Al506N |
| 24 | 0.02 | 3.37 | 6.9E+12 | 210 | 6.5 | ReAl11018 (ReAl12019), ReAl03 |

(continued)

| properties of sintered body | | | | | |
|---|---|---|---|---|---|
| Example | open porosity | bulk density | volume resistivity (Ω·cm) | length of columnar aggregates | mean grain diameter of AlN | crystalline phase (except AlN) |
| | % | g/cm³ | 25°C | μm | μm | |
| 25 | 0.04 | 3.37 | 2.6E+12 | 190 | 6.3 | ReAl11018 (ReAl12019), Al506N |
| 26 | 0.01 | 3.37 | 1.2E+10 | 110 | 4.7 | ReAl11018 (ReAl12019), ReAl03, MgAl203 |
| 27 | 0.00 | 3.35 | 2.8E+10 | 100 | 4.1 | ReAl11018 (ReAl12019), ReAl03, MgAl203 |
| 28 | 0.01 | 3.35 | 1.2E+11 | 120 | 4.2 | ReAl11018 (ReAl12019), ReAl03, MgAl203 |

As described above, the present invention provides a novel aluminum nitride material of aluminum nitride base and having a low volume resistivity at room temperature.
The present invention has been explained referring to the preferred embodiments, however, the present invention is not limited to the illustrated embodiments which are given by way of examples only, and may be carried out in various modes without departing from the scope of the invention.

**Claims**

1. An aluminum nitride material comprising aluminum nitride as the main component, and europium and samarium in a total content of 0.09 mole percent or more calculated as the oxides, wherein the molar ratio of the contents of europium to samarium calculated as the oxides is 0.2 or higher, said material comprising aluminum nitride phase and a composite oxide phase containing at least europium and aluminum, said complex oxide phase comprising one of the phases $EuAl_{12}O_{19}$ and $ReAl_{12}O_{19}$ where Re represents Eu and Sm.

2. An aluminum nitride material according to claim 1, wherein said composite oxide phase has a peak top in a range of 18.5 to 19.0 ° in an X-ray diffraction chart.

3. An aluminum nitride material according to claim 1 or 2, wherein the molar ratio of total content of europium and samarium calculated as the oxides to that of alumina $[(Eu_2O_3+ Sm_2O_3)/Al_2O_3]$ is 0.4 or lower.

4. An aluminum nitride material according to any one of claims 1 to 3, wherein said aluminum nitride phases comprise grains having a mean grain diameter of 3 μm or more.

5. An aluminum nitride material according to any one of claims 1 to 4, comprising an element belonging to IIA group of the Periodic Table in a content of 0.01 to 2 mole percent calculated as the oxide.

6. An aluminum nitride material according to claim 5, wherein said element is Mg and/or Ca.

7. An aluminum nitride material according to any one of claims 1 to 6, comprising an element belonging to group IVA of the Periodic Table in a content of 0.01 to 10 mole percent calculated as the nitride.

8. An aluminum nitride material according to claim 7, wherein said element belonging to group IVA is Ti.

9. An aluminum nitride material according to any one of claims 1 to 8, comprising a sintered body obtainable by sintering at a temperature of 1800 to 2200°C.

10. An aluminum nitride material defined according to any one of claims 1 to 9, wherein said material has a volume resistivity at room temperature of $10^{13}$ $\Omega \cdot$ cm or lower at an applied voltage of 500 V/mm.

11. An aluminum nitride material according to claim 10, said material having an activation energy of temperature dependency of volume resistivity from room temperature to 300 °C of 0.4 eV or lower.

12. An aluminum nitride material according to claim 10 or 11, said material having a voltage-current property given by I=kV, where "V" represents a voltage applied on said material, "I" represents a leakage current at a voltage of "V" and "k" represents a constant and where the non linear index " & " of 1.6 or lower at "V" in a range of 50 V/mm to 500 V/mm.

13. A member used for a system for producing semiconductor devices, said member comprising the material of any one of claims 1 to 12.

14. An apparatus for producing semiconductor devices, having a member comprising the material of any one of claims 1 to 12.

**Patentansprüche**

1. Aluminiumnitridmaterial, das Folgendes umfasst: Aluminiumnitrid als Hauptkomponente, Europium und Samarium in einer Gesamtmenge von 0,09 Mol-% oder mehr, berechnet als Oxide, worin das Molverhältnis des Europiumgehalts zu dem Samariumgehalt, berechnet als Oxid, 0,2 oder mehr beträgt, wobei das Material eine Aluminiumnitridphase und eine gemischte Oxidphase umfasst, die zumindest Europium und Aluminium enthält, wobei die komplexe Oxidphase eine der Phasen $EuAl_{12}O_{19}$ und $ReAl_{12}O_{19}$ umfasst, worin Re für Eu und Sm steht.

2. Aluminiumnitridmaterial nach Anspruch 1, worin die gemischte Oxidphase in einem Röntgenbeugungsdiagramm eine Reflexspitze im Bereich von 18,5 bis 19,0° aufweist.

3. Aluminiumnitridmaterial nach Anspruch 1 oder 2, worin das Molverhältnis des Gesamtgehalts an Europium und Samarium, berechnet als Oxide, zu jenem an Aluminiumoxid [$(Eu_2O_3+Sm_2O_3)/Al_2O_3$] 0,4 oder weniger beträgt.

4. Aluminiumnitridmaterial nach einem der Ansprüche 1 bis 3, worin die Aluminiumnitridphase Körner mit einem mittleren Korndurchmesser von 3 $\mu$m oder mehr umfasst.

5. Aluminiumnitridmaterial nach einem der Ansprüche 1 bis 4, das ein Element, das zu der Gruppe IIa des Periodensystems gehört, in einer Menge von 0,01 bis 2 Mol-%, berechnet als Oxid, umfasst.

6. Aluminiumnitridmaterial nach Anspruch 5, worin das Element Mg und/oder Ca ist.

7. Aluminiumnitridmaterial nach einem der Ansprüche 1 bis 6, das ein Element, das zu der Gruppe IVa des Periodensystems gehört, in einer Menge von 0,01 bis 10 Mol-%, berechnet als Nitrid, umfasst.

8. Aluminiumnitridmaterial nach Anspruch 7, worin das Element, das zu der Gruppe IVa gehört, Ti ist.

9. Aluminiumnitridmaterial nach einem der Ansprüche 1 bis 8, das einen Sinterkörper umfasst, der durch Sintern bei einer Temperatur von 1.800 bis 2.200 °C erhalten werden kann.

10. Aluminiumnitridmaterial nach einem der Ansprüche 1 bis 9, worin das Material bei Raumtemperatur bei einer angelegten Spannung von 500 V/mm einen Volumenwiderstand von $10^{13}$ $\Omega$ cm oder weniger aufweist.

11. Aluminiumnitridmaterial nach Anspruch 10, wobei das Material eine Aktivierungsenergie der Temperaturabhängigkeit des Volumenwiderstands von Raumtemperatur bis 300 °C von 0,4 eV oder weniger aufweist.

**12.** Aluminiumnitridmaterial nach Anspruch 10 oder 11, worin das Material eine durch I=kV$^\alpha$ angegebene Spannungs-Strom-Charakteristik aufweist, worin "V" für eine an das Material angelegte Spannung steht, "I" für einen Leckstrom bei einer Spannung "V" steht und "k" für eine Konstante steht und worin der nicht-lineare Index "$\alpha$" 1,6 oder weniger beträgt, wenn "V" im Bereich 50 V/mm bis 500 V/mm liegt.

**13.** Element, das für ein System zur Herstellung von Halbleitervorrichtungen eingesetzt wird, wobei das Element ein Material nach einem der Ansprüche 1 bis 12 umfasst.

**14.** Vorrichtung zur Herstellung von Halbleitervorrichtungen, die ein Element aufweist, das das Material nach einem der Ansprüche 1 bis 12 umfasst.


**Revendications**

**1.** Matériau de nitrure d'aluminium comprenant du nitrure d'aluminium comme composant principal, et de l'europium et samarium en une teneur totale de 0,09 mole pour cent ou plus calculée comme les oxydes, où le rapport molaire des teneurs en europium à samarium calculé comme les oxydes est de 0,2 ou plus élevé, ledit matériau comprenant une phase de nitrure d'aluminium et une phase d'oxyde composite contenant au moins de l'europium et de l'aluminium, ladite phase d'oxyde complexe comprenant une des phases $EuAl_{12}O_{19}$ et $ReAl_{12}O_{19}$, où Re représente Eu et Sm.

**2.** Matériau de nitrure d'aluminium selon la revendication 1, dans lequel ladite phase d'oxyde composite possède un sommet de crête dans la plage de 18,5 à 19,0° dans un graphique de diffraction de rayons X.

**3.** Matériau de nitrure d'aluminium selon la revendication 1 ou 2, dans lequel le rapport molaire de la teneur totale en europium et samarium calculé comme les oxydes à celui d'alumine $[(Eu_2O_3+Sm_2O_3)/Al_2O_3]$ est de 0,4 ou plus bas.

**4.** Matériau de nitrure d'aluminium selon l'une quelconque des revendications 1 à 3, dans lequel lesdites phases de nitrure d'aluminium comprennent des grains ayant un diamètre de grain moyen de 3 $\mu$m ou plus.

**5.** Matériau de nitrure d'aluminium selon l'une quelconque des revendications 1 à 4, comprenant un élément appartenant au groupe IIA de la Table Périodique en une teneur de 0,01 à 2 pour cent en mole calculée comme l'oxyde.

**6.** Matériau de nitrure d'aluminium selon la revendication 5, dans lequel ledit élément est Mg et/ou Ca.

**7.** Matériau de nitrure d'aluminium selon l'une quelconque des revendications 1 à 6, comprenant un élément appartenant au groupe IVA de la Table Périodique en une teneur de 0,01 à 10 pour cent en mole calculée comme le nitrure.

**8.** Matériau de nitrure d'aluminium selon la revendication 7, dans lequel ledit élément appartenant au groupe IVA est Ti.

**9.** Matériau de nitrure d'aluminium selon l'une quelconque des revendications 1 à 8, comprenant un corps fritté pouvant être obtenu par frittage à une température de 1800 à 2200°C.

**10.** Matériau de nitrure d'aluminium défini selon l'une quelconque des revendications 1 à 9, dans lequel ledit matériau a une résistivité volumique à température ambiante de $10^{13}$ $\Omega$ . cm ou plus basse à une tension appliquée de 500 V/mm.

**11.** Matériau de nitrure d'aluminium selon la revendication 10, ledit matériau ayant une énergie d'activation de la dépendance de température de la résistivité volumique de la température ambiante à 300°C de 0,4 eV ou plus basse.

**12.** Matériau de nitrure d'aluminium selon la revendication 10 ou 11, ledit matériau ayant une propriété de tension-courant fournie par I=kV$^\alpha$, ou "V" représente une tension appliquée audit matériau, "I" représente un courant de fuite à une tension de "V" et "k" représente une constante, et où l'indice non linéaire "$\alpha$" est de 1,6 ou plus bas à "V" dans une plage de 50 V/mm à 500 V/mm.

**13.** Elément utilisé pour un système pour produire des dispositifs à semi-conducteur, ledit élément comprenant le matériau selon l'une quelconque des revendications 1 à 12.

**14.** Appareil de production de dispositifs à semi-conducteur, ayant un élément comprenant le matériau selon l'une quelconque des revendications 1 à 12.

## Fig. 1

### Al$_2$O$_3$–Eu$_2$O$_3$

EP 1 452 510 B1

Fig. 2

Fig. 3

## Fig. 4

EP 1 452 510 B1

Fig. 5

25

**EP 1 452 510 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9315867 A

- US 20020110709 A1